# EUROPEAN PATENT APPLICATION

(11) **EP 2 065 992 A1**
(43) Date of publication of application: **03.06.2009**
(21) Application number: 08169791.4
(22) Date of filing: 24.11.2008
(51) Int. Cl.: H02G 3/22, A47B 21/06

(54) **Cable-guide element with rotating means for opening/closing the aperture for receiving cables and the like.**

(30) Priority: 30.11.2007 IT MI20070400 U
(71) Applicant: Pamar S.p.A., 20055 Renate (MI) (IT)
(72) Inventor: Bavuso, Giuseppe, 20055, Renate (IT)
(74) Representative: Raimondi, Margherita

(57) **Abstract**

Cable guide element comprising a box (10;110) with an aperture (11) for receiving cables (1) and for access thereto and having means (20) for opening/closing the said aperture (11), rotating about longitudinal axes inside the box itself.

## Description

The present invention relates to a cable-guide element with rotating means for opening/closing the aperture for receiving cables and the like.

It is known that, owing to the increasingly greater use of electrical and/or electronic equipment in working environments, it is required to provide cable-guide means which can be incorporated in the various furnishings of homes, offices and the like, so as to convey the electric power cables from the mains sockets to the working surfaces on which said equipment is arranged.

It is also known to provide for this purpose cable-guide elements to be mounted, for example, in desktops and in the bottom of bookshelves or tables for supporting equipment such as computers, lamps and the like, which are designed to allow the electric cables to pass through these surfaces. Although fulfilling their function, these cable-guides nevertheless have a number of drawbacks consisting in the small size of the aperture through which the cable passes and the limited possibility for access to the underlying box housing the cable and/or electrical branching elements.

The technical problem which is posed, therefore, is that of providing a cable-guide element, in particular to be mounted inside furnishings, which is able to provide a larger cable through-aperture corresponding to the larger cross-section of the said cables, needed to allow also the corresponding plugs attached to the cable to pass through, and which at the same time allows easy access to the underlying box containing the electrical branching components.

In connection with this problem it is also required that this cable guide should have small dimensions, be easy and inexpensive to produce and assemble and be able to be installed easily at any user premises using normal standardised connection means, while at the same time having a pleasing external appearance.

These results are obtained according to the present invention by a cable-guide element which comprises a box with an aperture for receiving cables and for access thereto and which has means for opening/closing said aperture, rotating about longitudinal axes inside the box itself.

Further details may be obtained from the following description of a non-limiting example of embodiment of the present invention provided with reference to the accompanying drawings in which:
- Figure 1 shows a plan view of a cable guide according to the present invention;
- Figure 2 shows a schematic cross-sectional view of a first embodiment of a cable guide according to the present invention in the open condition;
- Figure 3 shows a cross-sectional view, similar to that of Fig. 2, with the cable guide closed and cable passing through it;
- Figure 4 shows a cross-sectional view, similar to that of Fig. 2, of a second embodiment of the cable guide according to the present invention in the open condition;
- Figure 5 shows a cross-sectional view, similar to that of Fig. 4, with the cable guide closed and cable passing through it;
- Figure 6 shows a cross-sectional view, similar to that of Fig. 4, of a variation of embodiment of the said cable guide.

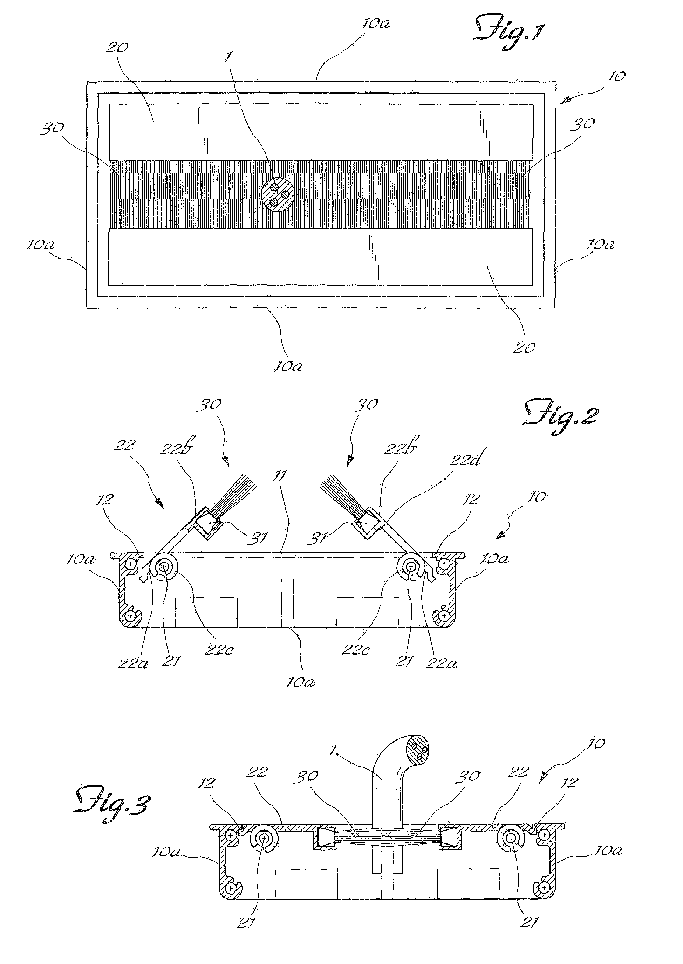

As shown in Figs. 1, 2 and 3, the cable guide according to the invention comprises essentially a box 10 of suitable height provided with a top aperture 11 extending in the longitudinal direction and delimited at the opposite ends by the sides 10a of the box.

The box has means 20 for opening/closing the said aperture 11, which rotate about longitudinal axes inside the box itself.

In greater detail said opening/closing means comprise a pair of pins 21 which are arranged inside the aperture 11 of the box and are symmetrically arranged with respect to the axis of vertical symmetry of the box at a suitable relative distance.

A respective flange 22 with two differently designed sections, i.e. an inner section 22a and an outer section 22b of different length, is hinged on each pin 21 so that the inner part 22a forms the part which comes into contact against a rotational stop 12 joined to the sides 10a of the box.

Joining together of the flange 22 and the respective pin 21 is performed by means of a resilient jaw 22c joined to the flange 22 itself.

The free end of the outer part 22b of the flange has a longitudinal seat 22d inside which the base 31 of a brush 30 extending over the entire longitudinal length of the cable guide is inserted.

With the configuration described above, opening of the two flanges 20 allows access to the inside of the box 10 via an aperture which is greater than that of the known art; at the same time closing of the two flanges 20 produces a slight interference in the transverse direction between the free ends of the brushes 30, creating in this case also (Fig. 3) a larger aperture for receiving cables 1 with a large diameter needed to power the required electrical loads.

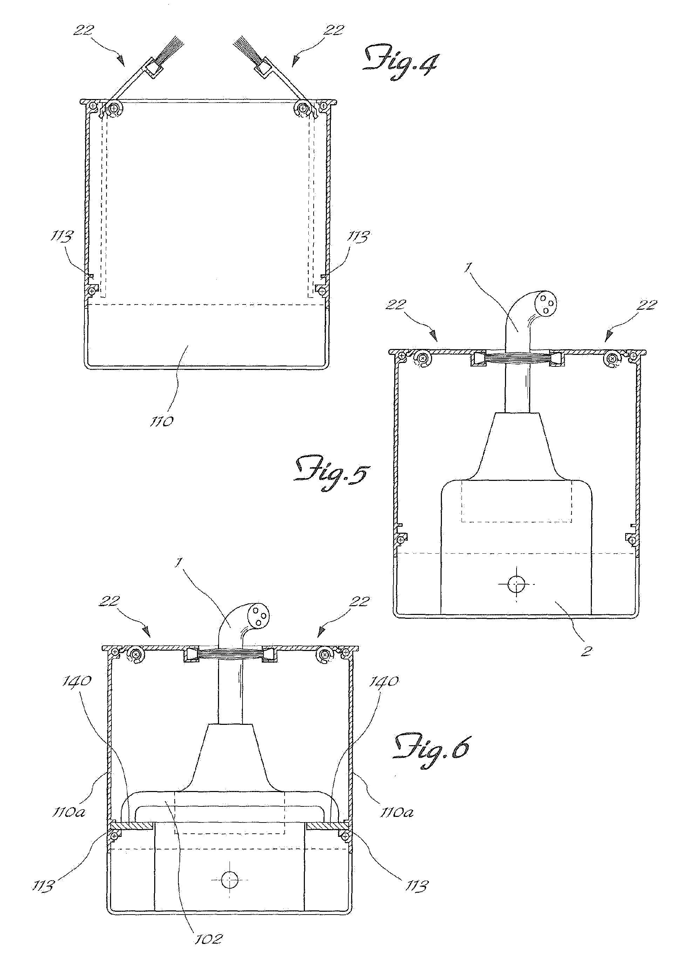

As shown in Fig. 4, it is envisaged moreover that the box 110 has a larger vertical dimension in order to contain electrical devices such as electrical branching socket units 1 (Fig. 5).

Fig. 6 shows, on the other hand, a further example of a variant in which pairs of brackets 140 are provided, said brackets being retained so as to project from corresponding seats 113 formed in the opposite longitudinal sides 110a of the box 110; said brackets are designed to support different electrical branching components 101.

Also in the case of the second example of embodiment, the opening/closing flanges 20 ensure easier access to the compartment containing the branching components and the necessary aperture for receiving cables with a large cross-section as well as the corresponding plugs.

It is therefore clear how with the cable guide according to the invention it is possible in a simple and low-cost manner to provide larger cross-sections for receiving electrical cables as well as larger apertures for access to the branching components inside the cable guide box.

In addition, owing to the simple opening/closing rotational movement, the cable guide may be easily used also by unskilled personnel who do not possess special tools.

Although described in connection with a number of embodiments and a few preferred examples, persons skilled in the art will understand that the present invention extends beyond the embodiments described in a specific manner and that the scope of the protection of the present invention is defined only by the following claims.

## Claims

1. Cable guide element comprising a box (10;110) with an aperture (11) for receiving cables (1) and for access thereto, **characterized in that** it has means (20) for opening/closing said aperture (11), rotating about longitudinal axes inside the box itself.

2. Cable guide element according to Claim 1, **characterized in that** said opening/closing means comprise a pair of flanges (22) hinged on a respective pin (21) arranged inside the aperture (11) of the box.

3. Cable guide element according to Claim 2, **characterized in that** said pins (21) are arranged symmetrically with respect to the axis of vertical symmetry of the box.

4. Cable guide element according to Claim 2, **characterized in that** said flanges have two differently designed sections, i.e. an inner section (22a) and an outer section (22b) of different length.

5. Cable guide element according to Claim 2, **characterized in that** said inner part (22a) of the flange (22) forms the part which comes into contact against a rotational stop (12) joined to the sides (10a) of the box.

6. Cable guide element according to Claim 2, **characterized in that** said flange (22) has a resilient jaw (22c) joined to the said flange and able to engage with the respective pin (21).

7. Cable guide element according to Claim 2, **characterized in that** the free end of the outer part (22b) of the flange has a longitudinal seat (22d).

8. Cable guide element according to Claim 2, **characterized in that** it has a brush (30) which extends over the entire longitudinal length of the cable guide and the base (31) of which is designed to be housed in said seat (22d) of the flange.

9. Cable guide element according to Claim 2, **characterized in that** said brushes have a length in the transverse direction such as to produce a relative interference between the respective closed free flange ends (22).

10. Cable guide element according to Claim 1, **characterized in** the said box (110) has pairs of brackets (140) which are retained so as to project from corresponding seats (113) formed in the opposite longitudinal sides (110a) of the box (110).
